# EUROPÄISCHE PATENTSCHRIFT

(11) **EP 4 151 603 B1**
(45) Veröffentlichungstag und Bekanntmachung des Hinweises auf die Patenterteilung: **11.03.2026**
(21) Anmeldenummer: 22186037.2
(22) Anmeldetag: 20.07.2022
(51) Int. Cl.: C02F 1/00, C02F 1/76, F16K 11/085, C02F 1/68, C02F 103/42

(54) **VORRICHTUNG ZUM AUFBEREITEN DES FÜLLWASSERS VON SCHWIMMBECKEN**
DEVICE FOR TREATING THE WATER IN SWIMMING POOLS
DISPOSITIF DE TRAITEMENT DE L'EAU DE REMPLISSAGE DES PISCINES

(30) Priorität: 20.09.2021 DE 202021105062 U
(43) Veröffentlichungstag der Anmeldung: 22.03.2023
(73) Patentinhaber: T.I.P. Technische Industrie Produkte GmbH, 74915 Waibstadt (DE)
(72) Erfinder: Vaassen, Julien, 69436 Schönbrunn (DE)
(74) Vertreter: Durm Patentanwälte PartG mbB

(56) Entgegenhaltungen:
- US-A- 5 234 588
- US-A1- 2005 211 613
- US-A1- 2018 372 235
- US-B1- 6 287 462

## Beschreibung

Die Erfindung betrifft eine Vorrichtung für die Aufbereitung des Füllwassers eines Schwimmbeckens oder Pools.

Ein mit Wasser gefülltes Schwimmbecken, insbesondere ein Swimmingpool im Freien, kann nicht längere Zeit einfach sich selbst überlassen bleiben. Aus der Umwelt gelangen Verunreinigungen wie Staub, Algensporen und andere Partikel in das Wasser. Die Badenden bringen ungewollt weitere Schmutzstoffe und auch Mikroorganismen in das Wasser. Das Füllwasser muss deshalb ständig gereinigt und desinfiziert werden, wobei das Wasser im Kreis geführt wird, sodass nur das verdunstete Wasser durch Frischwasser ersetzt werden muss.

Eine große Rolle bei der Wasseraufbereitung spielt die Filtrierung, also eine mechanische Reinigung, die Schmutzstoffe auffängt und in einem Filtermedium adsorbiert. Ein beladener Filter kann entweder durch Rückspülung gereinigt oder das Filtermedium kann einfach ausgetauscht werden.

Oft kommen Sandfilteranlagen zum Einsatz. Diese bestehen im Wesentlichen aus einem Filterbehälter oder -kessel und einer elektrischen Umlaufpumpe. Als Filtermedium dient feiner Quarzsand, alternativ praktische Filterbälle, die aus Fasern bestehen und einfach von Hand ausgewaschen werden können. Jeder Tropfen des Poolwassers sollte zwei- bis dreimal am Tag durch den Filterbehälter laufen.

Zur Desinfektion des Füllwassers dient sehr oft Chlor, das eine hohe keimtötende Wirkung hat. Gleichzeitig baut Chlor als starkes Oxidationsmittel im Wasser gelöste oxidierbare Verunreinigungen organischer Natur ab, welche sich auf andere Weise kaum aus dem Wasser entfernen lassen. Bekanntlich hat Chlor im Schwimmbadwasser aber auch Nachteile: Es greift, gerade weil es ein starkes Oxidationsmittel ist, die Haut an und wird besonders von Menschen mit empfindlicher Haut nicht gut vertragen. Die richtige Dosierung des Chlors ist deshalb eine Herausforderung: Zu viel Chlor ist schlecht verträglich, zu wenig freies Chlor im Wasser führt zu einem Übermaß an stickstoffhaltigen Verbindungen. Badewasser, das vermeintlich nach Chlor riecht und die Augen stark reizt, enthält nicht zu viel, sondern zu wenig Chlor, was durch eine kurzzeitige Überdosierung von freiem, nicht gebundenem Chlor- sogenannte Stoßchlorierung - ausgeglichen werden muss.

Als Chlorungsmittel stehen Festchlor-Präparate zur Verfügung, sowohl in Form von Granulat als auch Tabletten. Solche stabilisierten Chlorprodukte haben den Vorteil, dass sie entweder schnell oder langsam auflösbar ausgebildet sein können und dass Lagerung und Handhabung praktisch gefahrlos sind. Daher sind solche Festchlorpräparate, insbesondere Chlortabletten, für private Schwimmbecken besonders gut geeignet und beliebt.

Um Chlortabletten dem Poolwasser hinzuzufügen, gibt es verschiedene Methoden. Man kann z. B. die Chlortabletten in einen Dosierschwimmer füllen, welcher auf der Wasseroberfläche herumschwimmt, sodass das in den Tabletten gebundene Chlor allmählich herausgelöst wird. Nachteilig ist, dass sich das Chlor aus den sich auflösenden Chlortabletten relativ ungleichmäßig im Wasser verteilt.

Eine zweite Möglichkeit besteht darin, die Chlortabletten direkt über einen Oberflächenabsauger, einen sogenannten Skimmer, dem Füllwasser zuzugeben.

Das mit Chlor angereicherte Wasser läuft dann über die Rücklaufdüsen wieder zurück in das Schwimmbecken. Das Problem bei dieser Methode ist allerdings, dass sich die Chlortabletten auch dann auflösen, wenn der Poolfilter gerade nicht läuft und dadurch das im Skimmer verbleibende Wasser stark dem aggressiven Chlor ausgesetzt ist.

Die beste Methode für die Auflösung von Chlortabletten und kontinuierliche Zugabe von freiem Chlor in das Poolwasser ist eine Chlor-Dosierschleuse. Eine solche Dosierschleuse muss allerdings in die Filteranlage integriert werden, was naturgemäß mit größerem konstruktivem Aufwand und höheren Kosten einhergeht.

Das Dokument US 5 234 588 A offenbart eine Vorrichtung zum Aufbereiten des Füllwassers eines Swimming-Pools umfassend einen Filterbehälter mit Filterraum für Filtermedium, öffenbaren Deckel, Einlass für Rohwasser und Auslass für aufbereitetes Wasser; ferner mit einer innerhalb des Filterbehälters angeordneten Desinfektionskammer zur Aufnahme von festem wasserlöslichem Desinfektionsmittel, insbesondere Tabletten, wobei diese Desinfektionskammer von einem Teil des Rohwassers durchströmt wird. Der runde Aufnahmebehälter für Tabletten ist korbartig ausgebildet und hat schmale Längsschlitze. Konzentrisch um den runden Aufnahmebehälter für Tabletten ist ein korbartiges Verschließelement angeordnet, welches drehbar ist und die Schlitze des Behälters teilweise verschließen kann. Durch Verdrehen des Verschließelements gegenüber dem Aufnahmebehälter kann die Menge des aus dem Aufnahmebehälter ausgespülten Desinfektionsmittels variiert werden. Die Einstellung der Chlorierungsrate durch Verdrehen des Verschließelements gegen den Aufnahmebehälter ist unpraktisch und ungenau. Eine kontrollierte Durchströmung des Tablettenbehälters findet nicht statt. Um die Einstellung zu verändern, muss der Deckel des Filterbehälters abgenommen werden, um an das Verschließelement zu gelangen.

Das Dokument US 2005/211613 A1 offenbart ein Verfahren und ein System zur Flüssigkeitsaufbereitung, wobei das Flüssigkeitsaufbereitungssystem einen Behälter zur Aufnahme eines flüssigen Behandlungsmaterials aufweist und die Vorrichtung wirksam in verschiedenen Übergangsbereichen im Flüssigkeitssystem positioniert werden kann, um als Reaktion auf eine erhöhte Aktivität im Gewässer eine verbesserte Dispersionsrate bereitzustellen.

Das Dokument US 2018/372235 A1 offenbart eine Mehrstellungs-Ventilanordnung, insbesondere eine Drehrückspülventilanordnung mit mehreren Stellungen.

Das Dokument US 6 287 462 B1 offenbart eine Vorrichtung zum Desinfizieren umfassend eine zylindrische Kartusche zur Aufnahme eines Desinfektionsmittels, beispielsweise eines Silberbakteriums. Das Desinfektionsmittel wird in einen vorhandenen Filter im normalen Filterströmungsweg eingesetzt und ermöglicht das Filtern und Rückspülen. Die Patrone ist eine Vollstrompatrone und kann entweder aus einem Füllkörperbett oder einer losen Packung bestehen, um unter Filterbedingungen verflüssigt zu werden.

Der Erfindung liegt das technische Problem zugrunde, eine einfache und kostengünstige Vorrichtung insbesondere für kleine bis mittelgroße Schwimmbecken und Privatpools bereitzustellen, welche das Füllwasser nicht nur filtert, sondern auch zuverlässig desinfiziert, insbesondere durch kontinuierliche und fein dosierbare Chlorierung.

Gelöst wird die Aufgabe durch die im Schutzanspruch 1 angegebene Merkmalskombination.

Die erfindungsgemäße Vorrichtung zum Aufbereiten des Füllwassers von Schwimmbecken umfasst - in an sich bekannter Weise - einen Filterbehälter mit einem Filterraum für die Aufnahme eines Filtermediums, beispielsweise Sand oder Filterbälle; ferner einen öffenbaren Deckel zum Befüllen und Entleeren des Filterbehälters, einen Einlass für das aufzubereitende Rohwasser sowie einen Auslass für das aufbereitete Wasser. Ferner umfasst die Vorrichtung eine innerhalb des Filterbehälters angeordnete Desinfektionskammer zur Aufnahme von festem wasserlöslichem Desinfektionsmittel, bevorzugt in Form von Chlortabletten. Die Desinfektionskammer ist so ausgebildet, dass sie von einem Teil des Rohwassers durchströmt wird. Erfindungsgemäß umfasst die Vorrichtung ferner ein Verteilventil zum Verteilen des einfließenden Rohwassers auf einen ersten Teilstrom, der durch die Desinfektionskammer fließt, und einen zweiten Teilstrom, der direkt in den Filterraum fließt.

Der erste Teilstrom des Rohwassers, der von dem Verteilventil in die Desinfektionskammer geleitet wird, kommt mit dem dort gelagerten festen Desinfektionsmittel in Kontakt und löst dieses allmählich auf. Das derart mit Desinfektionsmittel angereicherte Rohwasser gelangt anschließend in den Filterraum, wo es sich mit dem zweiten Rohwasser-Teilstrom, der von dem Verteilventil direkt in den Filterraum geleitet wird, vermischt. Das Verteilventil bestimmt dabei das Mischungsverhältnis, vergleichbar einer Verschneideeinrichtung bei einer Wasserenthärteanlage.

Das Mischungsverhältnis zwischen den beiden Teilströmen ist vorteilhaft einstellbar mittels eines beweglichen Absperrkörpers des Verteilventils. Dieser Absperrkörper ist als hohles Absperrrohr ausgebildet, welches eine Einlassöffnung für das einfließende Rohwasser, eine erste Auslassöffnung für den ersten Teilstrom, der in die Desinfektionskammer fließt, und eine zweite Auslassöffnung für den zweiten Teilstrom, der direkt in den Filterraum fließt, aufweist.

Bei der erfindungsgemäßen Aufbereitungsvorrichtung ist das Absperrrohr in einem koaxialen Dichtrohr drehbar gelagert. Dabei bilden die Innenwandung des Dichtrohrs und die Außenwandung des Absperrrohrs aufeinander gleitende Dichtflächen, welche die beiden Auslassöffnungen im Absperrrohr bei gegenseitiger Verdrehung mehr oder weniger verschließen, um das Mischungsverhältnis zwischen den beiden Teilströmen zu regulieren. Optional kann das Dichtrohr eine axiale Nut haben, in der eine Dichtung sitzt.

Das Dichtrohr, in dem das Absperrrohr sitzt, ist an der Innenseite des Deckels angeordnet, vorzugsweise einstückig angeformt, und ragt von oben in die Desinfektionskammer hinein. Das in dem Dichtrohr drehbar gelagerte Absperrrohr ragt über den Deckel des Filterbehälters hinaus nach oben. Hierdurch ergibt sich eine platzsparende und kostengünstige Konstruktion, die kostengünstig in Kunststoffspritztechnik ausgeführt werden kann.

Die Desinfektionskammer ist zweckmäßig an der Innenseite des Deckels angeordnet. Dadurch ergibt sich eine Positionierung der Desinfektionskammer möglichst weit oben in dem Filterbehälter und damit mit maximalem Abstand zu dem Filtermedium im Aufnahmeraum des Filterbehälters. Hat der Deckel eine verschließbare Einlassöffnung über der Desinfektionskammer, so lässt sich das Desinfektionsmittel, also beispielsweise die Chlortabletten, sehr einfach in die Desinfektionskammer einbringen. Eine mechanische Entleerung der Desinfektionskammer ist bei dieser Konstruktion entbehrlich, weil das feste, aber wasserlösliche Desinfektionsmittel sich ja allmählich auflöst.

Vorteilhaft hat die Desinfektionskammer eine zylindrische Wandung und einen kreisförmigen Boden. Nach oben hin wird die Desinfektionskammer durch die Innenseite des Deckels des Filterbehälters abgeschlossen. Die zylindrische Wandung hat zweckmäßig eine Anzahl von Ausnehmungen, durch welche das mit Desinfektionsmittel angereicherte Rohwasser aus der Desinfektionskammer in den Filterraum abfließt.

Sinkt der Wasserspiegel in dem Filterbehälter unter das Niveau des Bodens der Desinfektionskammer, so fällt das darin gespeicherte Desinfektionsmittel trocken. Um eine unbeabsichtigte lokale Aufkonzentrierung von Desinfektionsmittel zu verhindern, kann im Boden eine kleine Abtropföffnung eingebracht sein, um einen Sumpf aus nassem Desinfektionsmittel zu verhindern.

Das Mischungsverhältnis zwischen den beiden Teilströmen wird erfindungsgemäß durch das Verteilventil bestimmt. Dieses Mischungsverhältnis ist letztlich entscheidend für die korrekte Dosierung des Desinfektionsmittels.

Das Verteilventil hat ferner einen von Hand betätigbaren Schwenkhebel, der mit dem oberen Ende des Absperrohrs verbunden ist und mit dem das Verteilverhältnis eingestellt werden kann, um die Dosierung der Zugabe von Desinfektionsmittel fein zu regulieren. Zweckmäßig trägt der Deckel des Filterbehälters an seiner Oberseite eine aufgeprägte oder aufgedruckte Skala. Die Stellung des handbetätigten Hebels gegenüber der Skala zeigt den Dosierungsgrad des Desinfektionsmittels bzw. die Chlordosierung optisch an.

Ein Ausführungsbeispiel der Erfindung wird nachstehend anhand der beigefügten Zeichnungen näher erläutert. Es zeigen:
- Figur 1: eine Vorrichtung zum Aufbereiten des Füllwassers von Schwimmbecken, in einer perspektivischen Ansicht schräg von oben;
- Figur 2: die Vorrichtung von Fig. 1, in einer Ansicht von der Seite;
- Figur 3: die Vorrichtung von Fig. 1, in einem Vertikalschnitt;
- Figur 4: einen Blick in die offene Desinfektionskammer der Vorrichtung gemäß Fig. 1, perspektivisch;
- Figur 5: den Absperrkörper des Verteilventils der Vorrichtung gemäß Fig. 1, perspektivisch.

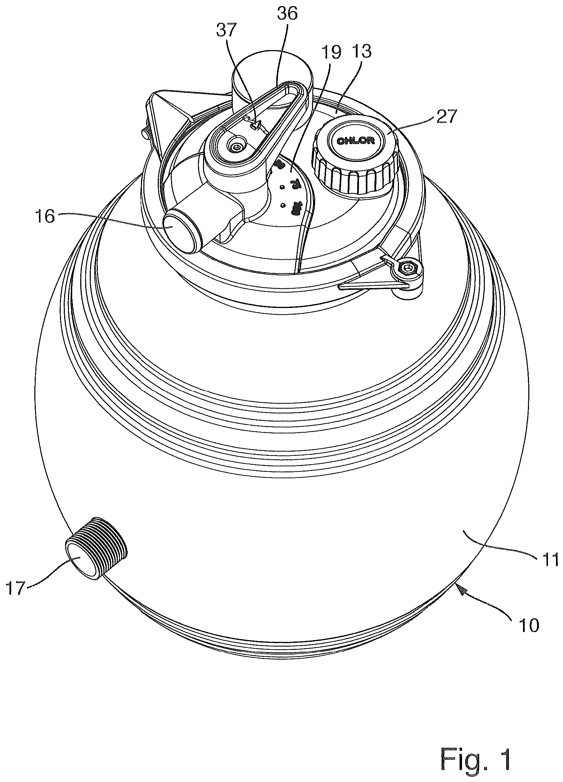

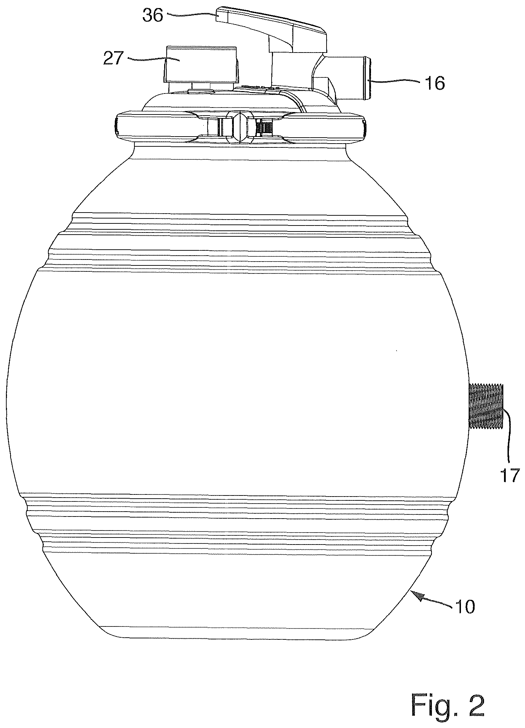

Die in den Figuren 1, 2 und 3 in verschiedenen Ansichten dargestellte Vorrichtung umfasst einen Filterbehälter 10 in Form eines hier runden Kessels. Das Gehäuse 11 ist einstückig aus Kunststoff hergestellt und hat einen abgeflachten Boden, der als Standfläche dient. Das Gehäuse 11 hat einen runden Deckel 13, der abnehmbar ist, um den Filterbehälter komplett zu öffnen. Fixiert wird der Deckel 13 mit einem Spannring. Dadurch ist der Filterraum 14 zugänglich, um Filterbälle 15 als Filtermedium einzufüllen.

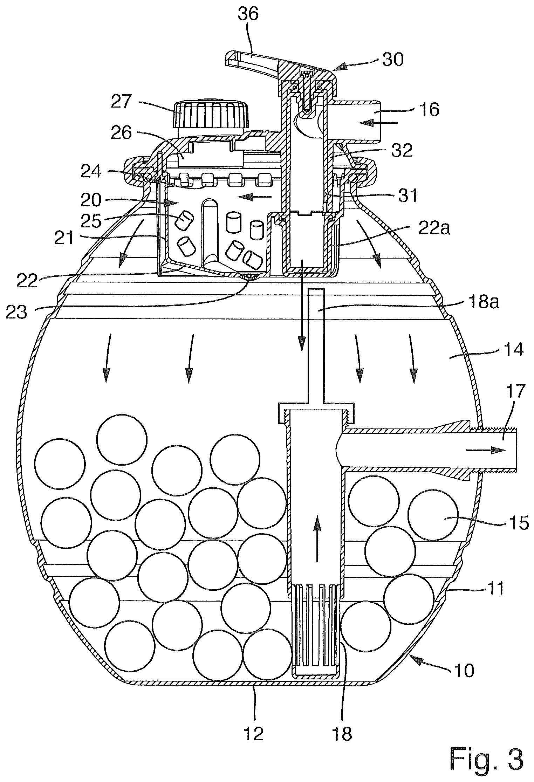

In den Deckel 13 ist ein Einlass 16 für das aufzubereitende Rohwasser integriert. Im unteren Teil des Gehäuses 11 sitzt ein Auslass 17 für das aufbereitete Wasser. Im Inneren des Behälters (vgl. Fig. 3) sitzt ein Sammelrohr 18, das knapp über dem Boden 12 endet und in den Auslass 17 mündet. Auf dem Sammelrohr 18 sitzt ein axial nach oben ragender Entlüftungsstutzen 18a.

Im Betrieb ist der Einlass 16 an eine (nicht dargestellte) Umlaufpumpe angeschlossen, welche das aufzubereitende Rohwasser aus dem Schwimmbecken ansaugt und in den Filterbehälter 10 drückt. An den Auslass 17 lässt sich eine (nicht dargestellte) Rückleitung anschließen, um das aufbereitete Wasser wieder zurück in das Schwimmbecken zu leiten. Bei geschlossenem Deckel 13 ist der Filterbehälter wasser- und druckdicht verschlossen.

Wie im Schnittbild der Fig. 3 zu sehen, ist innerhalb des Filterbehälters 10 eine Desinfektionskammer 20 angeordnet, und zwar an der Innenseite des Deckels 13. Die Desinfektionskammer 20 hat im Prinzip U-förmigen Querschnitt, gebildet von einer zylindrischen Wandung 21 und einem kreisförmigen Boden 22. An der tiefsten Stelle ist im Boden 22 eine kleine Abtropföffnung 23 eingebracht. Die Wandung 21 hat im Bereich des oberen Rands eine Anzahl von Ausnehmungen 24, durch die Wasser in den Filterraum 14 übertreten kann.

Im Betrieb ist die Desinfektionskammer 20 gefüllt mit Desinfektionsmittel in Form von Chlortabletten 25. Diese können über eine Einfüllöffnung 26 mit Schraubdeckel 27 durch den geschlossenen Deckel 13 des Filterbehälters 10 von oben in die Desinfektionskammer 20 eingefüllt werden.

In dem Deckel 13 bzw. teilweise innerhalb der Desinfektionskammer 20 befindet sich ein Verteilventil 30 mit einem Absperrkörper in Form eines hohlen Absperrrohrs 31, das in einem koaxialen Dichtrohr 32 axial drehbar gelagert ist. Das Dichtrohr 32 ist einstückig an den Deckel 13 angeformt und ragt von oben in die Desinfektionskammer 20 hinein.

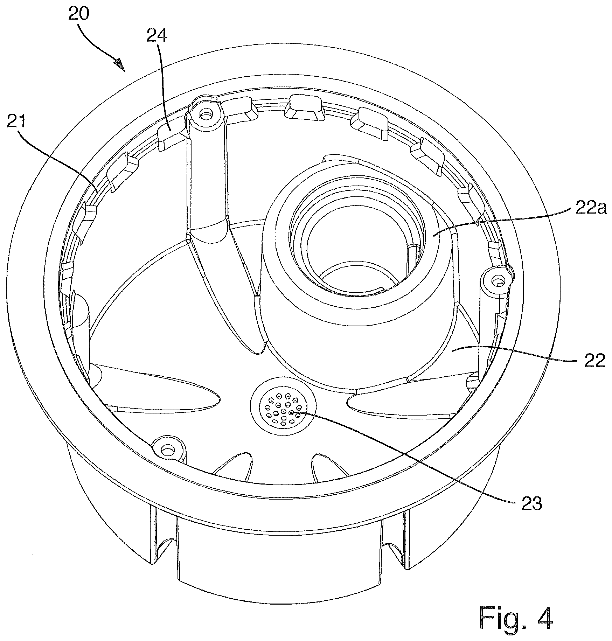

Figur 4 zeigt den Blick von oben in die Desinfektionskammer 20. Am Boden 22 ist eine runde Aufnahme 22a ausgeformt, welche das untere Ende des Absperrohrs 31 aufnimmt (vgl. Fig.3).

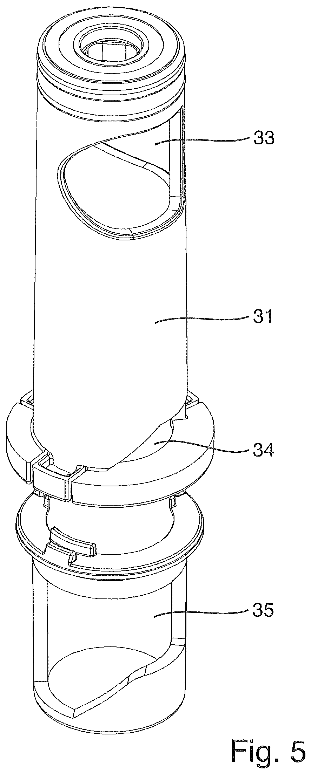

Fig. 5 lässt die Ausgestaltung des Absperrrohrs 31 im Detail erkennen.

Das Absperrrohr 31 hat im Bereich seines oberen Endes eine Einlassöffnung 33, welche mit dem Einlass 16 für Rohwasser in Verbindung steht. Ungefähr in der Mitte seiner axialen Länge hat das Absperrrohr 31 eine erste Auslassöffnung 34, welche in Abhängigkeit von der Winkellage des Absperrrohrs 31 gegenüber dem Dichtrohr 32 geschlossen, teilweise geöffnet oder ganz geöffnet ist, um einen kleineren oder größeren Teilstrom des einfließenden Rohwassers in die Desinfektionskammer 20 zu leiten. Am unteren Ende des Absperrohrs 31 sitzt eine zweite Auslassöffnung 35, die sich etwa um den halben Umfang der Wandung des Dichtrohrs 32 erstreckt. Durch diese zweite Auslassöffnung 35 strömt der verbleibende übrige Teil des Rohwassers direkt in den Filterraum 14 des Filterbehälters 10. Das Absperrrohr 31 hat die Funktion eines Absperrorgans vergleichbar einem Hahnküken.

Das in dem Dichtrohr 32 drehbar gelagerte Absperrrohr 31 ragt über den Deckel 13 des Filterbehälters 10 hinaus nach oben (vgl. Fig. 3). Ein Schwenkhebel 36 ist mit dem oberen Ende des Absperrrohrs 31 verbunden, wodurch das Absperrrohr 31 von Hand verdreht werden kann. Auf diese Weise lässt sich das Mischungsverhältnis zwischen dem ersten Teilstrom, der durch die Desinfektionskammer 20 fließt, und dem zweiten Teilstrom, der direkt in den Filterraum 14 fließt, stufenlos einstellen.

Auf der Außenseite des Deckels 13 ist eine Skala 19 aufgeprägt, welcher eine Markierung 37 an dem Schwenkhebel 36 gegenübersteht (Fig. 1). Die Zugabe von Chlor lässt sich anhand dieser Skala 19 zwischen 0 und 100 einstellen. Dabei entspricht 0 einer vollständigen Absperrung des Zuflusses von Rohwasser in die Desinfektionskammer, also kein Chlorzusatz, und entspricht 100 einem maximalen Durchfluss durch die Desinfektionskammer mit einer Chlorierung von ungefähr 35 %, bezogen auf das in den Filterbehälter 10 insgesamt einfließende Rohwasser.

Haben sich die Chlortabletten 25 in der Desinfektionskammer 20 vollständig aufgelöst, können einfach neue Chlortabletten 25 durch die Einfüllöffnung 26 eingeworfen werden. Wird die Einleitung von Rohwasser in den Filterbehälter 10 unterbrochen, beispielsweise infolge Abschaltens der Umlaufpumpe, so sinkt der Wasserspiegel innerhalb des Filterbehälters 10 unter den Boden 22 der Desinfektionskammer 20 ab, je nach Positionierung des Filterbehälters 10 und/oder Wasserstand im Pool. Das Wasser kann dann aus der Desinfektionskammer durch die Abtropföffnung 23 im Boden 22 nach unten abfließen, sodass eine unkontrollierte Freisetzung von Chlor aus den Chlortabletten 25 unterbunden wird. Dies dient zur Vermeidung einer schädlichen oder gar gefährlichen Aufkonzentration von freiem Chlor innerhalb des Filterbehälters 10.

### Bezugszeichen

- 10: Filterbehälter
- 11: Gehäuse
- 12: Boden
- 13: Deckel
- 14: Filterraum
- 15: Filterbälle
- 16: Einlass (Rohwasser)
- 17: Auslass
- 18: Sammelrohr
- 18a: Entlüftungsstutzen (Sammelrohr)
- 19: Skala (Deckel)

- 20: Desinfektionskammer
- 21: Wandung
- 22: Boden
- 22a: Aufnahme (Boden)
- 23: Abtropföffnung (Boden)
- 24: Ausnehmungen (Wandung)
- 25: Chlortabletten
- 26: Einfüllöffnung
- 27: Schraubdeckel

- 30: Verteilventil
- 31: Absperrrohr
- 32: Dichtrohr
- 33: Einlassöffnung (Absperrrohr)
- 34: erste Auslassöffnung (Absperrrohr)
- 35: zweite Auslassöffnung (Absperrohr)
- 36: Schwenkhebel

- 37: Markierung (Schwenkhebel)

## Patentansprüche

1. Vorrichtung zum Aufbereiten des Füllwassers von Schwimmbecken, umfassend
einen Filterbehälter (10) mit einem Filterraum (14) für ein Filtermedium, einem öffenbaren Deckel (13), einem Einlass (16) für das aufzubereitende Rohwasser und einem Auslass (17) für das aufbereitete Wasser;
einer innerhalb des Filterbehälters (10) angeordneten Desinfektionskammer (20) zur Aufnahme von festem wasserlöslichem Desinfektionsmittel, wobei die Desinfektionskammer von einem Teil des Rohwassers durchströmbar ist;
**gekennzeichnet durch**
ein Verteilventil (30) zum Verteilen des einfließenden Rohwassers auf einen ersten Teilstrom, der durch die Desinfektionskammer (20) fließt, und einen zweiten Teilstrom, der direkt in den Filterraum (14) fließt,
wobei das derart mit Desinfektionsmittel angereicherte Rohwasser des ersten Teilstroms anschließend in den Filterraum (14) gelangt, wo es sich mit dem zweiten Rohwasser-Teilstrom vermischt,
wobei das Verteilventil (30) einen beweglichen Absperrkörper hat, um das Verhältnis zwischen den beiden Teilströmen einzustellen,
wobei der Absperrkörper als hohles Absperrrohr (31) ausgebildet ist, welches eine Einlassöffnung (33) für das Rohwasser, eine erste Auslassöffnung (34) für den ersten Teilstrom und eine zweite Auslassöffnung (35) für den zweiten Teilstrom hat,
wobei das Absperrrohr (31) in einem koaxialen Dichtrohr (32) drehbar gelagert ist,
wobei die Innenwandung des Dichtrohrs (32) und die Außenwandung des Absperrrohrs (31) aufeinander gleitende Dichtflächen bilden, welche die beiden Auslassöffnungen (34, 35) im Absperrrohr (31) bei gegenseitiger Verdrehung mehr oder weniger verschließen, um das Mischungsverhältnis zwischen den beiden Teilströmen zu regulieren,
wobei das Dichtrohr (32) an der Innenseite des Deckels (13) angeordnet ist und in die Desinfektionskammer (20) hineinragt,
wobei das in dem Dichtrohr (32) drehbar gelagerte Absperrrohr (31) über den Deckel (13) des Filterbehälters (10) hinaus nach oben ragt,
und wobei ein Schwenkhebel (36) mit dem oberen Ende des Absperrrohrs (31) verbunden ist, wodurch das Absperrrohr (31) von Hand zur Einstellung des Verteilverhältnisses verdrehbar ist.

2. Vorrichtung nach Anspruch 1, wobei die Desinfektionskammer (20) an der Innenseite des Deckels (13) angeordnet ist.

3. Vorrichtung nach Anspruch 2, wobei der Deckel (13) eine verschließbare Einfüllöffnung (26) zum Einbringen von Desinfektionsmittel in die Desinfektionskammer (20) hat.

4. Vorrichtung nach einem der vorhergehenden Ansprüche, wobei die Desinfektionskammer (20) eine zylindrische Wandung (21) und einen kreisförmigen Boden (22) hat.

5. Vorrichtung nach Anspruch 4, wobei die Wandung eine Anzahl von Ausnehmungen (24) hat.

6. Vorrichtung nach einem der vorhergehenden Ansprüche, wobei der Boden (22) der Desinfektionskammer (20) eine Abtropföffnung (23) hat.

7. Vorrichtung nach einem der vorhergehenden Ansprüche, wobei die Desinfektionskammer (20) zur Aufnahme von Chlortabletten (25) ausgebildet ist.

## Claims

1. Device for treating the fill water of swimming pools, comprising
a filter container (10) with a filter chamber (14) for a filter medium, an openable lid (13), an inlet (16) for the raw water to be treated, and an outlet (17) for the treated water;
a disinfection chamber (20) arranged inside the filter container (10) for receiving solid water-soluble disinfectant, wherein the disinfection chamber can be flowed through by a portion of the raw water;
**characterized by**
a distribution valve (30) for distributing the inflowing raw water into a first partial flow that flows through the disinfection chamber (20), and a second partial flow that flows directly into the filter chamber (14),
wherein the raw water of the first partial flow enriched in this way with disinfectant subsequently passes into the filter chamber (14), where it mixes with the second raw-water partial flow,
wherein the distribution valve (30) has a movable shut-off body in order to adjust the ratio between the two partial flows,
wherein the shut-off body is designed as a hollow shut-off tube (31) which has an inlet opening (33) for the raw water, a first outlet opening (34) for the first partial flow, and a second outlet opening (35) for the second partial flow,
wherein the shut-off tube (31) is rotatably mounted in a coaxial sealing tube (32),
wherein the inner wall of the sealing tube (32) and the outer wall of the shut-off tube (31) form sliding sealing surfaces which, upon mutual rotation, more or less close the two outlet openings (34, 35) in the shut-off tube (31) in order to regulate the mixing ratio between the two partial flows,
wherein the sealing tube (32) is arranged on the inner side of the lid (13) and projects into the disinfection chamber (20),
wherein the shut-off tube (31), which is rotatably mounted in the sealing tube (32), projects upward beyond the lid (13) of the filter container (10),
and wherein a pivot lever (36) is connected to the upper end of the shut-off tube (31), by means of which the shut-off tube (31) can be rotated manually to adjust the distribution ratio.

2. Device according to claim 1, wherein the disinfection chamber (20) is arranged on the inner side of the lid (13).

3. Device according to claim 2, wherein the lid (13) has a closable filling opening (26) for introducing disinfectant into the disinfection chamber (20).

4. Device according to one of the preceding claims, wherein the disinfection chamber (20) has a cylindrical wall (21) and a circular base (22).

5. Device according to claim 4, wherein the wall has a number of recesses (24).

6. Device according to one of the preceding claims, wherein the base (22) of the disinfection chamber (20) has a drip opening (23).

7. Device according to one of the preceding claims, wherein the disinfection chamber (20) is designed to receive chlorine tablets (25).

## Revendications

1. Dispositif destiné au traitement de l'eau de remplissage de piscines, comprenant
un récipient de filtration (10) avec une chambre de filtration (14) destinée à un milieu filtrant, un couvercle ouvrable (13), une entrée (16) pour l'eau brute à traiter et une sortie (17) pour l'eau traitée ;
une chambre de désinfection (20) disposée à l'intérieur du récipient de filtration (10) pour recevoir un agent de désinfection solide soluble dans l'eau, la chambre de désinfection pouvant être traversée par une partie de l'eau brute ;
**caractérisé par**
une vanne de répartition (30) destinée à répartir l'eau brute entrante en un premier flux partiel qui s'écoule à travers la chambre de désinfection (20) et un second flux partiel qui s'écoule directement dans la chambre de filtration (14),
l'eau brute du premier flux partiel ainsi enrichie en agent de désinfection étant ensuite amenée dans la chambre de filtration (14), où elle se mélange avec le second flux partiel d'eau brute,
la vanne de répartition (30) comportant un corps d'obturation mobile afin de régler le rapport entre les deux flux partiels,
le corps d'obturation étant conçu sous la forme d'un tube d'obturation creux (31), lequel comporte une ouverture d'entrée (33) pour l'eau brute, une première ouverture de sortie (34) pour le premier flux partiel et une seconde ouverture de sortie (35) pour le second flux partiel,
le tube d'obturation (31) étant monté de manière rotative dans un tube d'étanchéité coaxial (32),
la paroi intérieure du tube d'étanchéité (32) et la paroi extérieure du tube d'obturation (31) formant des surfaces d'étanchéité coulissantes l'une par rapport à l'autre, lesquelles ferment plus ou moins les deux ouvertures de sortie (34, 35) du tube d'obturation (31) lors d'une rotation relative, afin de réguler le rapport de mélange entre les deux flux partiels,
le tube d'étanchéité (32) étant disposé sur la face intérieure du couvercle (13) et s'étendant dans la chambre de désinfection (20),
le tube d'obturation (31) monté de manière rotative dans le tube d'étanchéité (32) dépassant vers le haut au-delà du couvercle (13) du récipient de filtration (10),
et un levier pivotant (36) étant relié à l'extrémité supérieure du tube d'obturation (31), grâce auquel le tube d'obturation (31) est rotatif manuellement pour régler le rapport de répartition.

2. Dispositif selon la revendication 1, dans lequel la chambre de désinfection (20) est disposée sur la face intérieure du couvercle (13).

3. Dispositif selon la revendication 2, dans lequel le couvercle (13) comporte une ouverture de remplissage fermable (26) destinée à l'introduction de l'agent de désinfection dans la chambre de désinfection (20).

4. Dispositif selon l'une quelconque des revendications précédentes, dans lequel la chambre de désinfection (20) comporte une paroi cylindrique (21) et un fond circulaire (22).

5. Dispositif selon la revendication 4, dans lequel la paroi comporte un nombre d'évidements (24).

6. Dispositif selon l'une quelconque des revendications précédentes, dans lequel le fond (22) de la chambre de désinfection (20) comporte une ouverture d'égouttage (23).

7. Dispositif selon l'une quelconque des revendications précédentes, dans lequel la chambre de désinfection (20) est conçue pour recevoir des pastilles de chlore (25).
